# EUROPÄISCHE PATENTSCHRIFT

(11) **EP 4 370 363 B1**
(45) Veröffentlichungstag und Bekanntmachung des Hinweises auf die Patenterteilung: **10.09.2025**
(21) Anmeldenummer: 22741276.4
(22) Anmeldetag: 08.07.2022
(51) Int. Cl.: B60K 35/00, B60W 30/14, B60W 30/16, B60W 50/14, B60K 35/10, B60K 35/22, B60K 35/28, B60K 35/29

(54) **VERFAHREN ZUM BETREIBEN EINES FAHRERASSISTENZSYSTEMS EINES FAHRZEUGS MIT PROAKTIVEM VORSCHLAG ZUM DEAKTIVIEREN EINER GESCHWINDIGKEITSWARNUNG, FAHRERASSISTENZSYSTEM SOWIE FAHRZEUG**
METHOD FOR OPERATING A DRIVER ASSISTANCE SYSTEM OF A VEHICLE WITH PROACTIVE SUGGESTION FOR DEACTIVATING A SPEED WARNING, DRIVER ASSISTANCE SYSTEM AND VEHICLE
PROCÉDÉ DE FONCTIONNEMENT D'UN SYSTÈME D'ASSISTANCE AU CONDUCTEUR D'UN VÉHICULE AVEC PROPOSITION PROACTIVE DE DÉSACTIVATION D'UN AVERTISSEMENT DE VITESSE, SYSTÈME D'ASSISTANCE AU CONDUCTEUR ET VÉHICULE

(30) Priorität: 13.07.2021 DE 102021118054
(43) Veröffentlichungstag der Anmeldung: 22.05.2024
(73) Patentinhaber: Bayerische Motoren Werke Aktiengesellschaft, 80809 München (DE)
(72) Erfinder: KAGERER, Walter, 80939 München (DE); SPIESSL, Wolfgang, 85356 Freising (DE); KNEBEL, Simon, 80636 München (DE); ISRAEL, Boris, 80995 München (DE); LECHNER, Andreas, 80807 München (DE)
(86) Internationale Anmeldenummer: PCT/EP2022/069164
(87) Internationale Veröffentlichungsnummer: WO 2023/285321

(56) Entgegenhaltungen:
- EP-A2- 2 161 699
- DE-A1- 10 339 647
- DE-A1- 102007 005 245
- DE-A1- 102021 113 994
- DE-B4- 102006 056 444

## Beschreibung

Die vorliegende Erfindung betrifft ein Verfahren zum Betreiben eines Fahrerassistenzsystems eines Fahrzeugs. Darüber hinaus betrifft die vorliegende Erfindung ein Fahrerassistenzsystem für ein Fahrzeug. Schließlich betrifft die vorliegende Erfindung ein Fahrzeug mit einem derartigen Fahrerassistenzsystem.

Aus dem Stand der Technik sind unterschiedliche Fahrerassistenzsysteme bekannt, welche einen Fahrer bzw. Nutzer beim Führen des Fahrzeugs unterstützen können. Beispielsweise sind Fahrerassistenzsysteme bekannt, welche dem Nutzer die aktuell zulässige Höchstgeschwindigkeit anzeigen. Zu diesem Zweck können beispielsweise mit einer Kamera des Fahrzeugs Verkehrsschilder erkannt werden. Diese Funktion kann zudem durch die Geschwindigkeitsregelung bzw. durch die Längsregelung erweitert werden. Wenn beispielsweise der Nutzer bei der aktivierten Geschwindigkeitsregelung die Übernahme des Tempolimits gewählt hat, passt das Fahrerassistenzsystem die Geschwindigkeit nach einer manuellen Bedieneingabe des Nutzers oder automatisch an die Beschilderung bzw. die aktuell zulässige Höchstgeschwindigkeit an.

Darüber hinaus sind aus dem Stand der Technik so genannte Geschwindigkeitsbegrenzer bekannt. Bei einem solchen System kann von dem Fahrer ein Geschwindigkeitslimit eingestellt werden, um beispielsweise die aktuell zulässige Höchstgeschwindigkeit nicht zu überschreiten. Auch in diesem Zusammenhang ist bekannt, dass eine erkannte Änderung der zulässigen Höchstgeschwindigkeit für den Geschwindigkeitsbegrenzer als neues Geschwindigkeitslimit manuell oder automatisch übernommen wird.

Darüber hinaus ist aus dem Stand der Technik die Geschwindigkeitsregelung mit Abstandsregelung bekannt. Diese Funktion kann auch als Abstandsregeltempomat (ACC - Adaptive Cruise Control) bezeichnet werden. Diese Funktion kann zudem automatisch den Abstand bzw. Sicherheitsabstand zu einem vorausfahrenden Fahrzeug bestimmen und kann die Geschwindigkeit des Fahrzeugs entsprechend anpassen. Auch bei dieser Geschwindigkeitsregelung kann die aktuell zulässige Höchstgeschwindigkeit berücksichtigt werden bzw. das Tempolimit übernommen werden.

Des Weiteren ist aus dem Stand der Technik die Geschwindigkeitswarnung bekannt. Hierbei wird der Nutzer entsprechend gewarnt, falls die aktuelle Geschwindigkeit des Fahrzeugs die zulässige Höchstgeschwindigkeit für die Fahrbahn, auf welcher sich das Fahrzeug aktuell bewegt, überschreitet. Neue Gesetzgebungen, Vorschriften und Regularien, wie beispielsweise die zukünftig in Europa geltende General Safety Regulation, regeln die Warnung bei Geschwindigkeitsüberschreitungen. Hierbei ist beispielsweise vorgesehen, dass sehr deutlich wahrnehmbar und permanent über verschiedene Kanäle gewarnt werden soll, sobald eine Überschreitung der aktuell zulässigen Höchstgeschwindigkeit vorliegt.

In bestimmten Situationen oder auch in bestimmten Regionen kann die Geschwindigkeitswarnung den Nutzer jedoch auch vom Verkehrsgeschehen ablenken oder den Nutzer stören. Beispielsweise kann es in Regionen mit unzureichender Infrastruktur dazu kommen, dass die Ermittlung der zulässigen Höchstgeschwindigkeit an die Systemgrenzen gerät und es zu unberechtigten und fehlerhaften Warnungen kommt. Es kann ferner der Fall sein, dass die Geschwindigkeitswarnung auf Grundlage von Informationen ausgegeben wird, welche für die befahrene Fahrbahn nicht mehr gültig sind. Eine falsche oder ungewünschte Geschwindigkeitswarnung kann dazu führen, dass sich der Nutzer durch das Fahrerassistenzsystem gestört oder verunsichert fühlt. Ferner kann der Nutzer durch die Geschwindigkeitswarnung abgelenkt werden und es kann der Fall sein, dass die Akzeptanz für die Geschwindigkeitswarnung bzw. die Nutzung des Fahrerassistenzsystems sinkt.

In diesem Zusammenhang offenbart die DE 103 39 647 A1 eine Vorrichtung zur Fahrerwarnung, bei welcher eine Warnung an einen Fahrer erst dann ausgegeben wird, wenn ein Grenzwert für einen sicherheitskritischen Zustand überschritten wird, der in Abhängigkeit von einem gespeicherten Nutzerprofil festgelegt wird. Das Nutzerprofil kann beispielsweise ein sportliches Fahren des Fahrers beschreiben. Die Warnung kann bei einem Überschreiten der erlaubten Höchstgeschwindigkeit ausgegeben werden.

Es ist Aufgabe der vorliegenden Erfindung, eine Lösung aufzuzeigen, wie ein Nutzer bei der Verwendung eines Fahrerassistenzsystems mit einer Geschwindigkeitswarnung auf einfache und effektive Weise unterstützt werden kann. Darüber hinaus soll ein Fahrzeug mit einem derartigen Fahrerassistenzsystem bereitgestellt werden.

Diese Aufgabe wird erfindungsgemäß durch ein Verfahren, durch ein Fahrerassistenzsystem sowie durch ein Fahrzeug mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren dient zum Betreiben eines Fahrerassistenzsystems eines Fahrzeugs. Das Verfahren umfasst das Erfassen einer zulässigen Höchstgeschwindigkeit für eine Fahrbahn, auf welcher sich das Fahrzeug während einer aktuellen Fahrt bewegt oder zukünftig höchstwahrscheinlich bewegen wird. Außerdem umfasst das Verfahren das automatische Aktivieren einer Geschwindigkeitswarnung zur Warnung eines Nutzers, falls eine Geschwindigkeit des Fahrzeugs während der aktuellen Fahrt die zulässige Höchstgeschwindigkeit überschreitet. Des Weiteren umfasst das Verfahren das Definieren einer Fahrsituation für die Fahrt anhand eines Verhaltens des Nutzers bei der aktuellen Fahrt und/oder bei vorhergehenden Fahrten mit dem Fahrzeug und/oder anhand von einem Verhalten von weiteren Verkehrsteilnehmern. Außerdem umfasst das Verfahren das Ermitteln anhand der definierten Fahrsituation, ob eine Deaktivierung der Geschwindigkeitswarnung erfolgen soll. Ferner umfasst das Verfahren das Ausgeben eines Vorschlags an den Nutzer zur Deaktivierung der Geschwindigkeitswarnung, falls die Geschwindigkeitswarnung deaktiviert werden soll.

Mit Hilfe des Fahrerassistenzsystems kann die aktuell zulässige Höchstgeschwindigkeit für die Fahrbahn, auf welcher sich das Fahrzeug aktuell befindet bzw. bewegt, bestimmt werden. Die zulässige Höchstgeschwindigkeit beschreibt insbesondere die für das Fahrzeug aktuell gültige Höchstgeschwindigkeit. Die aktuell zulässige Höchstgeschwindigkeit kann auch für einen einzelnen Fahrstreifen der Fahrbahn bestimmt werden, auf welchem sich das Fahrzeug aktuell bewegt. Die zulässige Höchstgeschwindigkeit kann auch als Tempolimit bezeichnet werden. Darüber hinaus kann die zulässige Höchstgeschwindigkeit für die Fahrbahn bestimmt werden, auf welcher sich das Fahrzeug zukünftig mit einer sehr hohen Wahrscheinlichkeit bewegen wird. Es können also auch vorausliegende Geschwindigkeitsbegrenzungen erkannt werden. Um die zulässige Höchstgeschwindigkeit bestimmen zu können, können mittels einer Kamera des Fahrerassistenzsystems entsprechende Verkehrsschilder, Hinweisschilder, Anzeigen von Verkehrsleitsystemen, Schilderbrücken oder dergleichen erfasst werden. Des Weiteren können zum Bestimmen und/oder Plausibilisieren der zulässigen Höchstgeschwindigkeit digitale Kartendaten herangezogen werden.

Es ist zudem vorgesehen, dass die Geschwindigkeitswarnung automatisch aktiviert wird. Diese Geschwindigkeitswarnung kann nach dem Start des Fahrzeugs bzw. nach einem Klemmenwechsel und/oder nach einem Nutzerwechsel automatisch erfolgen. Bei dieser Geschwindigkeitswarnung wird eine Warnung an den Nutzer bzw. den Fahrer des Fahrzeugs ausgegeben, falls die aktuelle Geschwindigkeit des Fahrzeugs die erfasste zulässige Höchstgeschwindigkeit überschreitet. Dies gilt für den Fall, dass das Fahrzeug von dem Fahrer manuell manövriert wird. Zudem gilt dies für den Fall, dass die Regelung der Längsgeschwindigkeit des Fahrzeugs von dem Fahrerassistenzsystem übernommen wird. Die Geschwindigkeitswarnung kann grundsätzlich akustisch, optisch und/oder haptisch ausgegeben werden. Es kann auch vorgesehen sein, dass die Geschwindigkeitswarnung in mehreren Stufen ausgegeben wird. Beispielsweise kann zunächst optisch und anschließend akustisch gewarnt werden. Die Geschwindigkeitswarnung kann auch mehrfach hintereinander ausgegeben werden. Gemäß der vorliegenden Erfindung ist vorgesehen, dass der aktuellen Fahrt des Fahrzeugs eine definierte Fahrsituation zugeordnet wird. Bei der Definition der Fahrsituation kann das Verhaltens des Nutzers bzw. Fahrers bei der aktuellen Fahrt berücksichtigt werden. Alternativ oder zusätzlich kann zur Definition der Fahrsituation das Verhalten des Nutzers bei vorhergehenden Fahrten mit dem Fahrzeug berücksichtigt werden. Im Betrieb des Fahrzeugs können also fortlaufend Beobachtungen durchgeführt werden, welche das Fahrhalten bzw. Fahrverhalten des Nutzers charakterisieren. Auf Grundlage des Verhaltens des Nutzers bei der aktuellen Fahrt und/oder des bisherigen Verhaltens des Nutzers kann dann für die aktuelle Fahrt eine Fahrsituation definiert werden. Alternativ oder zusätzlich kann es vorgesehen sein, dass zur Definition der Fahrsituation das Verhaltens von zumindest einem weiteren Verkehrsteilnehmer herangezogen wird. Mit anderen Worten kann also für die aktuelle Fahrt des Fahrzeugs abgeschätzt werden, wie sich der Fahrer des Fahrzeugs selbst und/oder andere Verkehrsteilnehmerverhalten würden bzw. wie diese auf die Geschwindigkeitswarnung reagieren würden. Es kann grundsätzlich auch vorgesehen sein, dass eine Mehrzahl von vorbestimmten Fahrsituationen vorgegeben ist und für die aktuelle Fahrt des Fahrzeugs eine dieser Fahrsituationen ausgewählt wird bzw. dass eine dieser vorbestimmten Fahrsituationen der aktuellen Fahrt zugeordnet wird.

Auf Grundlage der definierten Fahrsituation kann nun ermittelt werden, ob eine Deaktivierung der Geschwindigkeitswarnung erfolgen soll. Mit anderen Worten wird also auf Grundlage der definierten Fahrsituation bestimmt, ob der Nutzer des Fahrzeugs bei einer Überschreitung der aktuell zulässigen Höchstgeschwindigkeit gewarnt werden will oder nicht. Falls auf Grundlage der definierten Fahrsituation erkannt wird, dass eine Deaktivierung der Geschwindigkeitswarnung erfolgen soll, wird der Vorschlag an den Nutzer zur Deaktivierung der Geschwindigkeitswarnung ausgegeben. Bei diesem Vorschlag kann dem Nutzer beispielsweise angezeigt werden, wie er die Geschwindigkeitswarnung deaktivieren kann. Es kann auch vorgesehen sein, dass der Nutzer zu einer entsprechenden Bedieneingabe aufgefordert wird, durch welche dann die Geschwindigkeitswarnung deaktiviert wird. Auf diese Weise kann bei einer unberechtigten oder fehlerhaften Geschwindigkeitswarnung dem Nutzer ein proaktiver Vorschlag zur Deaktivierung der Geschwindigkeitswarnung ausgegeben werden.

Wie zuvor erläutert, kann die Fahrsituation anhand des aktuellen und/oder vorhergehenden Verhaltens des Nutzers und/oder dem Verhalten von anderen Verkehrsteilnehmern ermittelt werden. Beispielsweise können verschiedene Parameter bzw. Kriterien definiert werden, welche das Verhalten des Nutzers seit Beginn der aktuellen Fahrt und/oder das historische Verhalten des Nutzers und/oder das Verhalten der anderen Verkehrsteilnehmer beschreiben. Auf Grundlage dieser Parameter kann dann die Fahrsituation definiert werden bzw. eine Fahrsituation aus einer Mehrzahl von vordefinierten Fahrsituationen ausgewählt werden. Es kann auch vorgesehen sein, dass ein Beobachtungsalgorithmus entwickelt wird, der aufbauend auf bestimmten Wahrscheinlichkeiten bestimmt, ob der Nutzer bei der aktuellen Fahrt vor der Überschreitung der zulässigen Höchstgeschwindigkeit gewarnt werden will oder nicht.

Wenn nun ermittelt wird, dass der Nutzer mit einer hohen Wahrscheinlichkeit die Geschwindigkeitswarnung deaktivieren möchte, kann dem Nutzer vorgeschlagen werden, die Geschwindigkeitswarnung zumindest temporär zu deaktivieren. Dem Nutzer kann auch angezeigt bzw. erklärt werden, wie er die Geschwindigkeitswarnung selbst deaktivieren kann. Dabei kann die Deaktivierung über zumindest eine Bedienhandlung des Nutzers, eine Spracheingabe, eine Bediengeste oder dergleichen erfolgen. Dem Nutzer kann auch angezeigt werden, wie er ein Bedienmenü zur Deaktivierung aufrufen kann bzw. wie er ein sogenanntes Lesezeichen oder einen Schnellzugriff zu dem Bedienmenü speichern kann. Außerdem kann vorgesehen sein, dass die Geschwindigkeitswarnung automatisch deaktiviert wird, falls erkannt wird, dass der Nutzer mit einer hohen Wahrscheinlichkeit die Geschwindigkeitswarnung deaktivieren möchte. In diesem Fall kann der Nutzer über die erfolgte Deaktivierung informiert werden.

In einer Ausführungsform wird der Fahrt ein Ort, eine Strecke und/oder eine Routenführung zugeordnet und die Fahrsituation wird in Abhängigkeit von dem zugeordneten Ort, der zugeordneten Strecke und/oder der zugeordneten Routenführung definiert. Beispielsweise kann der aktuellen Fahrt des Fahrzeugs ein Ort zugeordnet werden. Unter einem Ort ist vorliegend beispielsweise ein Gebiet, eine Region, ein Land oder dergleichen zu verstehen. Hierbei kann beispielsweise berücksichtigt werden, ob es sich um eine Region mit unzureichender Infrastruktur oder nicht handelt. Der aktuellen Fahrt kann auch eine Strecke zugeordnet werden. Die Strecke kann beschreiben, ob sich das Fahrzeug aktuell Innerorts, auf einer Landstraße, einer Autobahn oder dergleichen bewegt. Hier kann auch der Typ der Fahrbahn bei der Definition der Fahrsituation berücksichtigt werden. Ferner kann beispielsweise die Fahrbahnbeschaffenheit, der Ausbauzustand der Fahrbahn oder dergleichen berücksichtigt werden. Beispielsweise kann hier berücksichtigt werden, ob es sich um eine kurvige Fahrbahn, eine Fahrbahn mit Steigungen und/oder Gefällen oder dergleichen handelt. Darüber hinaus kann der aktuellen Fahrt eine Routenführung zugeordnet werden. Dabei können beispielsweise Informationen von einem Navigationssystem des Fahrzeugs berücksichtigt werden. Insbesondere kann hier auch der zukünftige Streckenverlauf bei der Definition der Fahrsituation berücksichtigt werden. Insgesamt kann somit also die Fahrsituation auf Grundlage der örtlichen Gegebenheiten und/oder der Ausgestaltung der Fahrbahn definiert werden.

In einer weiteren Ausführungsform wird die Fahrsituation anhand des Verhaltens des Nutzers während der aktuellen Fahrt und/oder bei den vorhergehenden Fahrten an einem ähnlichen oder demselben Ort, auf einer ähnlichen oder derselben Strecke und/oder während einer ähnlichen oder derselben Routenführung definiert. Bei der Definition der Fahrsituation kann also berücksichtigt werden, wie sich der Fahrer während der aktuellen Fahrt und/oder zuvor auf ähnlichen Fahrbahnen, Straßentypen oder dergleichen verhalten hat. Es kann auch berücksichtigt werden, wie sich der Fahrer zuvor in ähnlichen Gebieten, in ähnlichen Verkehrssituationen oder dergleichen verhalten hat. Ferner kann berücksichtigt werden, ob der Nutzer bzw. der Fahrer an einem solchen Ort, auf einer solchen Strecke oder bei einer derartigen Routenführung meist die Geschwindigkeitswarnung manuell selbst deaktiviert hat.

In einer weiteren Ausgestaltung wird die Fahrsituation anhand des Verhaltens von den weiteren Verkehrsteilnehmern an einem ähnlichen oder demselben Ort, auf einer ähnlichen oder derselben Strecke und/oder während einer ähnlichen oder derselben Routenführung definiert. Es kann beispielsweise berücksichtigt werden, wie sich andere Fahrer bzw. Verkehrsteilnehmer zu einem früheren Zeitpunkt auf derselben Strecke verhalten haben. Es kann beispielsweise der Fall sein, dass die von dem Fahrzeug aktuell befahrene Strecke zumindest ein falsch erkanntes oder falsch vorgegebenes Tempolimit aufweist. Dies kann beispielsweise daran erkannt werden, dass viele weitere Verkehrsteilnehmer, welche diese Strecke aktuell befahren bzw. in der Vergangenheit befahren haben, mit einer anderen Geschwindigkeit fahren als der erkannten zulässigen Höchstgeschwindigkeit. In diesem Fall kann beispielsweise die Fahrsituation derart definiert werden, dass der Fahrer mit einer hohen Wahrscheinlichkeit die Geschwindigkeitswarnung deaktivieren möchte.

Um das Verhalten der weiteren Verkehrsteilnehmer bestimmen zu können, können Daten bestimmt und/oder empfangen werden, welche das Verhalten der weiteren Verkehrsteilnehmer beschreiben. Diese Daten können beispielsweise mit Hilfe von Umfeldsensoren des Fahrzeugs bestimmt werden. Mit den Umfeldsensoren kann insbesondere die Geschwindigkeit der anderen Verkehrsteilnehmer bestimmt werden. Ferner können die Daten von einem Server bzw. einem Backend an das Fahrzeug übertragen werden. Zudem können die Daten über Fahrzeug-zu-Fahrzeug-Kommunikation und/oder über Fahrzeug-zu-Infrastruktur-Kommunikation an das Fahrzeug übertragen werden.

Eine weitere Ausführungsform sieht vor, dass das Verhalten des Nutzers beschreibt, ob ein manuelles Deaktivieren der Geschwindigkeitswarnung bei der aktuellen Fahrt und/oder bei den vorhergehenden Fahrten durch den Nutzer erfolgt ist. Wenn beispielsweise grundsätzlich erkannt wird, dass der Nutzer die Geschwindigkeitswarnung deaktiviert, kann davon ausgegangen werden, dass der Nutzer die Geschwindigkeitswarnung auch bei der aktuellen Fahrt deaktivieren möchte. Hierbei kann zudem berücksichtigt werden bzw. bei vorhergehenden Fahrten erkannt werden, dass der Nutzer die Geschwindigkeitswarnung nach einer definierten Zeit nach dem Start des Fahrzeugs deaktiviert. In diesem Fall kann der proaktive Vorschlag zur Deaktivierung der Geschwindigkeitswarnung nach einer bestimmten bzw. definierten Zeitspanne ausgegeben werden.

Gemäß einer weiteren Ausgestaltung beschreibt das Verhalten des Nutzers, ob der Nutzer die Geschwindigkeitswarnung bei der aktuellen Fahrt und/oder bei den vorhergehenden Fahrten ignoriert hat. Es kann beispielsweise der Fall sein, dass der Fahrer Geschwindigkeitswarnungen, die bei vorhergehenden Fahrten ausgegeben wurden, ignoriert hat bzw. nicht beachtet hat. Dies kann beispielsweise daran erkannt werden, dass der Nutzer das Fahrzeug manuell mit einer höheren Geschwindigkeit als der zulässigen Höchstgeschwindigkeit bewegt hat. Auch bei einer derartigen Fahrsituation bzw. bei einem derartigen Verhalten des Nutzers kann davon ausgegangen werden, dass der Nutzer die Geschwindigkeitswarnung deaktivieren möchte.

Es kann ferner vorgesehen sein, dass der proaktive Vorschlag zur Deaktivierung der Geschwindigkeitswarnung ausgegeben wird, falls der Nutzer eine vorbestimmte Anzahl von Geschwindigkeitswarnungen pro Fahrt bzw. während der aktuellen Fahrt vollständig ignoriert hat. Beispielsweise kann der proaktive Vorschlag ausgegeben werden, falls die Geschwindigkeitswarnung zwischen zweimal und zehnmal pro Fahrt vollständig ignoriert wurde. Unter dem Begriff "vollständig ignoriert" ist vorliegend zu verstehen, dass der Nutzer weder auf optische Warnungen bzw. Anzeigen noch auch auf gegebenenfalls zusätzlich ausgegebene akustische Warnungen nicht reagiert hat.

Der proaktive Vorschlag zur Deaktivierung der Geschwindigkeitswarnung kann akustisch und/oder haptisch ausgegeben werden. Insbesondere ist vorgesehen, dass der Vorschlag optisch bzw. als Anzeige ausgegeben wird. Dabei kann zudem vorgesehen sein, dass der Vorschlag für eine vorbestimmte Zeitdauer angezeigt wird. Die Zeitdauer kann zwischen einer Sekunde und zehn Sekunden betragen, beispielsweise kann die Zeitdauer sechs Sekunden betragen. Zudem kann vorgesehen sein, dass der Vorschlag erneut angezeigt wird, falls der Nutzer den angezeigten Vorschlag nicht gesehen hat. Beispielsweise kann der Vorschlag ausgegeben werden, wenn der Nutzer eine vorbestimmte Anzahl von Geschwindigkeitswarnungen, beispielsweise zwischen zwei und zehn aufeinanderfolgende Geschwindigkeitswarnungen, pro Fahrt vollständig ignoriert hat.

Des Weiteren kann der proaktive Vorschlag für eine vorbestimmte Anzahl von Fahrten des Nutzers angezeigt werden. Beispielsweise kann der Vorschlag nur für die ersten fünf Fahrten pro Nutzer ausgegeben werden. Zudem kann eine weitere Ausgabe des proaktiven Vorschlags unterbleiben, falls der Nutzer bereits bei zumindest einem ausgegebenen Vorschlag eine Bedienhandlung durchgeführt hat bzw. eine Interaktion von dem Nutzer erfolgt ist. Beispielsweise kann die Ausgabe von weiteren proaktiven Vorschlägen gestoppt werden, falls der Nutzer mit dem Vorschlag zweimal interagiert hat. Diese Interaktion kann beispielsweise über eine Bedienhandlung an einem Touch-Display oder dergleichen erfolgen.

In einer weiteren Ausführungsform beschreibt das Verhalten des Nutzers, ob der Nutzer bei der aktuellen Fahrt und/oder den vorhergehenden Fahrten einen Anpassungswert für eine Geschwindigkeitsbegrenzung und/oder eine Geschwindigkeitsregelung des Fahrzeugs vorgegeben hat. Mit dem Fahrerassistenzsystem kann zudem die Längsregelung bzw. die Regelung der Geschwindigkeit des Fahrzeugs ermöglicht werden. Hierbei kann die Geschwindigkeit des Fahrzeugs bzw. die Längsgeschwindigkeit des Fahrzeugs auf eine Setzgeschwindigkeit geregelt werden, welche der Summe der aktuell erfassten Höchstgeschwindigkeit und einem Anpassungswert bzw. einem Offset entspricht. Dieser Anpassungswert kann von dem Fahrer eingestellt werden. Dabei kann es zudem vorgesehen sein, dass bei der Längsregelung automatisch der Abstand bzw. Sicherheitsabstand zu einem vorausfahrenden Verkehrsteilnehmer durch Anpassen der Geschwindigkeit des Fahrzeugs eingestellt wird. Mit anderen Worten kann mit dem Fahrerassistenzsystem ein Abstandsregeltempomat bereitgestellt werden. Ferner kann mittels des Fahrerassistenzsystems ein Geschwindigkeitsbegrenzer bereitgestellt werden. Auch hier kann für das Geschwindigkeitslimit des Geschwindigkeitsbegrenzers ein Anpassungswert bzw. Offset durch den Fahrer vorgegeben werden. Wenn hier erkannt wird, dass der Nutzer einen positiven Anpassungswert bzw. einen Anpassungswert, welcher einen vorbestimmten Mindestwert überschreitet, eingestellt hat, kann davon ausgegangen werden, dass der Fahrer die Geschwindigkeitswarnung deaktivieren möchte.

In einer weiteren Ausführungsform beschreibt das Verhalten der anderen Verkehrsteilnehmer, ob die anderen Verkehrsteilnehmer sich mit einer höheren Geschwindigkeit als der erkannten Höchstgeschwindigkeit bewegen. Es kann also überprüft werden, ob andere Fahrer bzw. Verkehrsteilnehmer ihr Fahrzeug mit einer höheren Geschwindigkeit bewegen als der aktuell erkannten zulässigen Höchstgeschwindigkeit. Auch in diesem Fall kann davon ausgegangen werden, dass der Fahrer die Geschwindigkeitswarnung deaktivieren möchte. Dies gilt auch für den Fall, dass der Nutzer das Fahrzeug auf einer ähnlichen oder derselben Strecke mit einer höheren Geschwindigkeit als der aktuell erkannten zulässigen Höchstgeschwindigkeit bewegt hat.

Ein erfindungsgemäßes Fahrerassistenzsystem für ein Fahrzeug ist zum Durchführen eines erfindungsgemäßen Verfahrens und der vorteilhaften Ausgestaltungen davon eingerichtet. Das Fahrerassistenzsystem kann dazu eingerichtet sein, eine zulässige Höchstgeschwindigkeit für die Fahrbahn, auf welcher sich das Fahrzeug aktuell bewegt und/oder zukünftig höchstwahrscheinlich bewegen wird, zu erfassen. Zu diesem Zweck kann das Fahrerassistenzsystem zumindest eine Kamera aufweisen und auf Grundlagen der Bilddaten der Kamera entsprechende Verkehrsschilder in der Umgebung des Fahrzeugs erkennen und hieraus die zulässige Höchstgeschwindigkeit ableiten. Außerdem kann die zulässige Höchstgeschwindigkeit auf Grundlage von Kartendaten und/oder Daten eines Navigationssystems ermittelt und/oder plausibilisiert werden.

Ferner kann mittels des Fahrerassistenzsystems automatisch die Geschwindigkeitswarnung aktiviert werden, bei welcher eine Warnung ausgegeben wird, falls die aktuelle Geschwindigkeit des Fahrzeugs die zulässige Höchstgeschwindigkeit überschreitet. Mittels des Fahrerassistenzsystems bzw. einer Recheneinrichtung des Fahrerassistenzsystems kann einer aktuellen Fahrt des Fahrzeugs eine Fahrsituation zugeordnet werden. Diese Fahrsituation kann auf Grundlage eines Verhaltens des Nutzers in der Vergangenheit und/oder auf Grundlage des Verhaltens von weiteren Verkehrssteilnehmern ermittelt werden.

In Abhängigkeit von der definierten Fahrsituation kann dann entschieden werden, ob der Fahrer bzw. Nutzer eine Deaktivierung der Geschwindigkeitswarnung wünscht oder nicht. Falls davon ausgegangen wird, dass der Nutzer eine Deaktivierung der Geschwindigkeitswarnung wünscht, kann mittels einer Ausgabeeinrichtung proaktiv ein Hinweis an den Fahrer zur Deaktivierung der Geschwindigkeitswarnung ausgegeben werden.

Ein erfindungsgemäßes Fahrzeug umfasst ein erfindungsgemäßes Fahrerassistenzsystem. Das Fahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Fahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs mit einem Fahrerassistenzsystem zur Ausgabe einer Geschwindigkeitswarnung; und
- Fig. 2: das Fahrzeug gemäß Fig. 1 in einer beispielhaften Verkehrssituation.

In den Figuren werden gleiche oder funktionsgleiche Elemente mit den gleichen Bezugszeichen versehen.

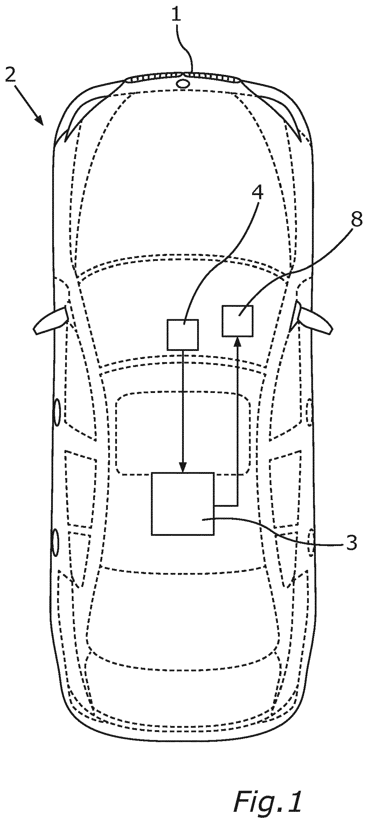

Fig. 1 zeigt in einer schematischen Darstellung ein Fahrzeug 1, welches vorliegend als Personenkraftwagen ausgebildet ist, in einer Draufsicht. Das Fahrzeug 1 umfasst ein Fahrerassistenzsystem 2, welches dazu dient, einen Nutzer bzw. Fahrer beim Führen des Fahrzeugs 1 zu unterstützen.

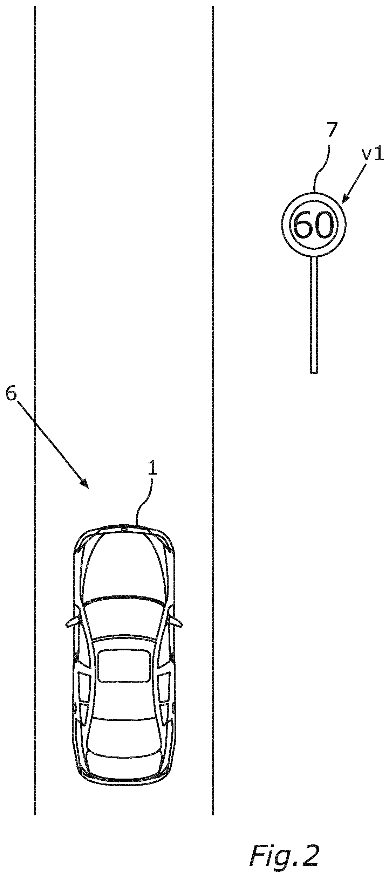

In dem vorliegenden Beispiel umfasst das Fahrerassistenzsystem 2 eine Kamera 4, mittels welcher Informationen zu einer zulässigen Höchstgeschwindigkeit v1 auf einer Fahrbahn 6, auf welcher sich das Fahrzeug 1 aktuell befindet und/oder zukünftig höchstwahrscheinlich bewegen wird, erfasst werden können. Beispielsweise kann mittels der Kamera ein Verkehrszeichen 7 erfasst werden, welches die zulässige Höchstgeschwindigkeit v1 beschreibt (siehe Fig. 2).

Darüber hinaus umfasst das Fahrerassistenzsystem 2 eine Recheneinrichtung 3, welche beispielsweise durch zumindest ein elektronisches Steuergerät des Fahrzeugs 1 gebildet sein kann. Die Recheneinrichtung 3 ist zur Datenübertragung mit der Kamera 4 verbunden und kann somit Bilddaten, welche mittels der Kamera 4 bereitgestellt werden, entsprechend auswerten. Zudem kann die Recheneinrichtung 3 digitale Daten empfangen und auf Grundlage dieser Daten die zulässige Höchstgeschwindigkeit v1 bestimmen oder plausibilisieren. Diese Daten können Navigationsdaten beziehungsweise digitale Kartendaten sein. Die digitalen Daten können von einem Navigationssystem, einem Backend oder dergleichen empfangen werden. Es kann auch vorgesehen sein, dass die digitalen Daten über Fahrzeug-zu-Fahrzeug-Kommunikation und/oder über Fahrzeug-zu-Infrastruktur-Kommunikation an das Fahrzeug 1 übertragen werden.

Darüber hinaus umfasst das Fahrerassistenzsystem 2 eine Ausgabeeinrichtung 8, mittels welcher eine Geschwindigkeitswarnung an den Nutzer ausgegeben werden kann. Diese Warnung bzw. Geschwindigkeitswarnung kann optisch, akustisch und/oder haptisch ausgegeben werden. Dabei kann die Geschwindigkeitswarnung ausgegeben werden, falls eine aktuelle Geschwindigkeit des Fahrzeugs 1 die erfasste vorgegebene Höchstgeschwindigkeit v1 überschreitet. Dabei kann diese Geschwindigkeitswarnung automatisch beim Start des Fahrzeugs 1 bzw. nach einem Klemmenwechsel oder Nutzerwechsel aktiviert werden.

Das Fahrerassistenzsystem 2 ist zudem dazu eingerichtet, ein Verhalten des Nutzers beim Betrieb des Fahrzeugs 1 zu bestimmen. Beispielsweise kann das Fahrerassistenzsystem 2 aufzeichnen, ob der Nutzer bei der aktuellen Fahrt und/oder bei vorhergehenden Fahrten mit dem Fahrzeug 1 die Geschwindigkeitswarnung ignoriert und/oder manuell deaktiviert hat. Hierbei kann zudem aufgezeichnet werden, auf welcher Art von Strecke, an welchem Ort und/oder bei welcher Routenführung der Nutzer die Geschwindigkeitswarnung deaktiviert hat. Es kann auch aufgezeichnet werden, ob der Nutzer beispielsweise nach einer gewissen Zeitdauer nach dem Start des Fahrzeugs 1 die Geschwindigkeitswarnung deaktiviert hat. Des Weiteren kann als Verhalten des Nutzers aufgezeichnet werden, ob dieser für eine Geschwindigkeitsregelung oder eine Geschwindigkeitsbegrenzung im Betrieb des Fahrzeugs 1 einen Anpassungswert bzw. Offset vorgesehen hat.

Des Weiteren kann das Fahrerassistenzsystem 2 dazu eingerichtet sein, Daten zu empfangen, welche das Verhalten von zumindest einem weiteren Verkehrsteilnehmer beschreiben. Insbesondere können Daten empfangen werden, welche die Geschwindigkeit von anderen Verkehrsteilnehmern auf der Strecke bzw. in dem Streckenabschnitt, den das Fahrzeug 1 aktuell befährt, beschreiben. Diese Daten können mit einer nicht gezeigten Kommunikationseinrichtung des Fahrerassistenzsystems 2 empfangen werden. Beispielsweise können diese Daten von einer Infrastruktureinrichtung, einem Server, über Fahrzeug-zu-Fahrzeug-Kommunikation, über Fahrzeug-zu-Infrastruktur-Kommunikation oder dergleichen empfangen werden.

Fig. 2 zeigt beispielhaft eine Verkehrssituation, bei welcher sich das Fahrzeug 1 gemäß Fig. 1 auf einer Fahrbahn 6 befindet. Dieser Fahrbahn 6 ist eine zulässige Höchstgeschwindigkeit v1 von 60 km/h zugeordnet. Diese zulässige Höchstgeschwindigkeit v1 kann mittels der Kamera 4 des Fahrerassistenzsystems 2 anhand des Verkehrszeichens 7 erkannt werden.

Vorliegend wird davon ausgegangen, dass die aktuelle Geschwindigkeit des Fahrzeugs 1 63 km/h beträgt. Somit liegt die aktuelle Geschwindigkeit des Fahrzeugs 1 über der zulässigen Höchstgeschwindigkeit v1 und mittels der Ausgabeeinrichtung 8 wird die Geschwindigkeitswarnung an den Nutzer ausgegeben.

Anhand dem zuvor beschriebenen Verhalten des Nutzers während der aktuellen Fahrt und/oder während der vorhergehender Fahrten und/oder anhand des zuvor bestimmten Verhaltens der weiteren Verkehrsteilnehmer kann für die aktuelle Fahrt des Fahrzeugs 1 auf der Fahrbahn 6 eine Fahrsituation definiert werden. Aus dieser Fahrsituation kann dann abgeleitet werden, ob der Nutzer die Geschwindigkeitswarnung deaktivieren möchte. Beispielsweise kann ein Beobachtungsalgorithmus entwickelt und/oder genutzt werden, der aufbauend auf bestimmten Wahrscheinlichkeiten bestimmt, ob der Nutzer hier gewarnt werden will oder die Warnung lieber deaktivieren möchte. Falls erkannt wird, dass der Nutzer die Geschwindigkeitswarnung mit einer hohen Wahrscheinlichkeit deaktivieren möchte, kann dem Nutzer proaktiv vorgeschlagen werden, die Geschwindigkeitswarnung zu deaktivieren.

Insbesondere kann der proaktive Vorschlag ausgegeben werden, falls der Nutzer die Geschwindigkeitswarnung, beispielsweise zweimal bis zehnmal pro Fahrt vollständig ignoriert hat. Falls der ausgegebene Vorschlag von dem Nutzer nicht wahrgenommen wird, kann nach Ignorieren des Tempolimits, beispielsweise zweimal bis zehnmal pro Fahrt, erneut ein Vorschlag ausgegeben werden. Der Vorschlag kann beispielsweise für die ersten fünf Fahrten des Nutzers bzw. pro Fahrer-ID ausgegeben werden. Zudem können weitere Vorschläge unterbleiben, falls der Nutzer mit dem Vorschlag zweimal interagiert hat.

## Patentansprüche

1. Verfahren zum Betreiben eines Fahrerassistenzsystems (2) eines Fahrzeugs (1), mit den Schritten:
- Erfassen einer zulässigen Höchstgeschwindigkeit (v1) für eine Fahrbahn (6), auf welcher sich das Fahrzeug (1) während einer aktuellen Fahrt bewegt und/oder zukünftig bewegen wird,
- Automatisches Aktivieren einer Geschwindigkeitswarnung zur Warnung eines Nutzers, falls eine Geschwindigkeit des Fahrzeugs (1) während der aktuellen Fahrt die zulässige Höchstgeschwindigkeit (v1) überschreitet und
- Definieren einer Fahrsituation für die Fahrt anhand eines Verhaltens des Nutzers bei der aktuellen Fahrt und/oder bei vorhergehenden Fahrten mit dem Fahrzeug (1) und/oder anhand von einem Verhalten von weiteren Verkehrsteilnehmern,
**gekennzeichnet durch,**
- Ermitteln anhand der definierten Fahrsituation, ob eine Deaktivierung der Geschwindigkeitswarnung erfolgen soll und
- Ausgeben eines Vorschlags an den Nutzer zur Deaktivierung der Geschwindigkeitswarnung, falls die Geschwindigkeitswarnung deaktiviert werden soll.

2. Verfahren nach Anspruch 1,
**dadurch gekennzeichnet, dass**
der Fahrt ein Ort, eine Strecke und/oder eine Routenführung zugeordnet wird und die Fahrsituation in Abhängigkeit von dem zugeordneten Ort, der zugeordneten Strecke und/oder der zugeordneten Routenführung definiert wird.

3. Verfahren nach Anspruch 2,
**dadurch gekennzeichnet, dass**
die Fahrsituation anhand des Verhaltens des Nutzers während der aktuellen und/oder den vorhergehenden Fahrten an einem ähnlichen oder demselben Ort, einer ähnlichen oder derselben Strecke und/oder einer ähnlichen oder derselben Route definiert wird.

4. Verfahren nach einem der Ansprüche 2 oder 3,
**dadurch gekennzeichnet, dass**
die Fahrsituation anhand des Verhaltens von den weiteren Verkehrsteilnehmern an einem ähnlichen oder demselben Ort, einer ähnlichen oder derselben Strecke und/oder einer ähnlichen oder derselben Route definiert wird.

5. Verfahren nach einem der vorhergehenden Ansprüche,
**dadurch gekennzeichnet, dass**
das Verhalten des Nutzers beschreibt, ob ein manuelles Deaktivieren der Geschwindigkeitswarnung bei der aktuellen Fahrt und/oder bei den vorhergehenden Fahrten durch den Nutzer erfolgt ist.

6. Verfahren nach einem der vorhergehenden Ansprüche,
**dadurch gekennzeichnet, dass**
das Verhalten des Nutzers beschreibt, ob der Nutzer die Geschwindigkeitswarnungen bei der aktuellen Fahrt und/oder bei den vorhergehenden Fahrten ignoriert hat.

7. Verfahren nach einem der vorhergehenden Ansprüche,
**dadurch gekennzeichnet, dass**
das Verhalten des Nutzers beschreibt, ob der Nutzer bei der aktuellen Fahrt und/oder bei den vorhergehenden Fahrten einen Anpassungswert für eine Geschwindigkeitsbegrenzung und/oder eine Geschwindigkeitsregelung vorgegeben hat.

8. Verfahren nach einem der vorhergehenden Ansprüche,
**dadurch gekennzeichnet, dass**
das Verhalten der anderen Verkehrsteilnehmer beschreibt, ob die anderen Verkehrsteilnehmer sich mit einer höheren Geschwindigkeit als der erfassten Höchstgeschwindigkeit (v1) bewegen.

9. Fahrerassistenzsystem (2) für ein Fahrzeug (1), wobei das Fahrerassistenzsystem (2) zum Durchführen eines Verfahrens nach einem der vorhergehenden Ansprüche eingerichtet ist.

10. Fahrzeug (1), insbesondere Personenkraftwagen, umfassend ein Fahrerassistenzsystem (2) nach Anspruch 9.

## Claims

1. Method for operating a driver assistance system (2) of a vehicle (1), with the steps:
- detecting a maximum permissible speed (v1) for a road (6) on which the vehicle (1) is moving during a current trip and/or will move in the future,
- automatically activating a speed warning for warning a user if a vehicle speed (1) exceeds the maximum permissible speed (v1) during the current trip, and
- defining a driving situation for the trip based on a behavior of the user during the current trip and/or previous trips with the vehicle (1) and/or on the basis of the behavior of other road users,
**characterized by**
- determining on the basis of the defined driving situation whether the speed warning should be deactivated and
- issuing a suggestion to the user to deactivate the speed warning if the speed warning should be deactivated.

2. Method according to Claim 1,
**characterized in that**
a location, a route section and/or a route guidance is assigned to the trip and the driving situation is defined depending on the assigned location, the assigned route section and/or the assigned route guidance.

3. Method according to Claim 2,
**characterized in that**
the driving situation is defined on the basis of the behavior of the user during the current trip and/or previous trips at a similar location or the same location, a similar route section or the same route section and/or a similar route or the same route.

4. Method according to either of Claims 2 and 3, **characterized in that**
the driving situation is defined based on the behavior of other road users at a similar location or the same location, a similar route section or the same route section and/or a similar route or the same route.

5. Method according to any one of the preceding claims, **characterized in that**
the behavior of the user describes whether a manual deactivation of the speed warning has been carried out by the user during the current trip and/or previous trips.

6. Method according to any one of the preceding claims, **characterized in that**
the behavior of the user describes whether the user has ignored the speed warnings during the current trip and/or previous trips.

7. Method according to any one of the preceding claims, **characterized in that**
the behavior of the user describes whether the user has specified an adjustment value for speed limiting and/or cruise control for the current trip and/or previous trips.

8. Method according to any one of the preceding claims, **characterized in that**
the behavior of other road users describes whether the other road users are moving at a speed higher than the recorded maximum speed (v1).

9. Driver assistance system (2) for a vehicle (1), wherein the driver assistance system (2) is set up to carry out a method according to any one of the preceding claims.

10. Vehicle (1), in particular a passenger car, containing a driver assistance system (2) according to Claim 9.

## Revendications

1. Procédé pour faire fonctionner un système d'aide à la conduite (2) d'un véhicule (1), comprenant les étapes suivantes :
- acquisition d'une vitesse maximale autorisée (v1) pour une voie de circulation (6) sur laquelle le véhicule (1) se déplace pendant un trajet en cours et/ou se déplacera à l'avenir,
- activation automatique d'un avertissement de vitesse destiné à avertir un utilisateur dans le cas où la vitesse du véhicule (1) dépasse la vitesse maximale autorisée (v1) pendant le trajet en cours et
- définition d'une situation de conduite pour le trajet à l'aide d'un comportement de l'utilisateur lors du trajet en cours et/ou lors de trajets précédents avec le véhicule (1) et/ou à l'aide du comportement d'autres usagers de la route,
**caractérisé par**
- détermination, en fonction de la situation de conduite définie, si une désactivation de l'avertissement de vitesse doit avoir lieu et
- délivrance d'une suggestion à l'utilisateur en vue de désactiver l'avertissement de vitesse dans le cas où l'avertissement de vitesse doit être désactivé.

2. Procédé selon la revendication 1,
**caractérisé en ce que**
le trajet est associé à un lieu, un parcours et/ou un itinéraire et la situation de conduite est définie en fonction du lieu associé, du parcours associé et/ou de l'itinéraire associé.

3. Procédé selon la revendication 2,
**caractérisé en ce que**
la situation de conduite est définie à l'aide du comportement de l'utilisateur pendant le trajet actuel et/ou les trajets précédents à un lieu similaire ou identique, sur un parcours similaire ou identique et/ou sur un itinéraire similaire ou identique.

4. Procédé selon l'une des revendications 2 ou 3, **caractérisé en ce que**
la situation de conduite est définie à l'aide du comportement des autres usagers de la route à un lieu similaire ou identique, sur un parcours similaire ou identique et/ou sur un itinéraire similaire ou identique.

5. Procédé selon l'une des revendications précédentes, **caractérisé en ce que**
le comportement de l'utilisateur décrit si une désactivation manuelle de l'avertissement de vitesse a été effectuée par l'utilisateur pendant le trajet en cours et/ou lors des trajets précédents.

6. Procédé selon l'une des revendications précédentes, **caractérisé en ce que**
le comportement de l'utilisateur décrit si l'utilisateur a ignoré les avertissements de vitesse lors du trajet en cours et/ou lors des trajets précédents.

7. Procédé selon l'une des revendications précédentes, **caractérisé en ce que**
le comportement de l'utilisateur décrit si l'utilisateur a prédéfini une valeur d'adaptation pour une limitation de vitesse et/ou une régulation de vitesse lors du trajet en cours et/ou lors des trajets précédents.

8. Procédé selon l'une des revendications précédentes, **caractérisé en ce que**
le comportement des autres usagers de la route décrit si les autres usagers de la route se déplacent à une vitesse supérieure à la vitesse maximale (v1) acquise.

9. Système d'aide à la conduite (2) pour un véhicule (1), le système d'aide à la conduite (2) étant conçu pour mettre en œuvre un procédé selon l'une des revendications précédentes.

10. Véhicule (1), notamment voiture particulière, comprenant un système d'aide à la conduite (2) selon la revendication 9.
